# EUROPÄISCHE PATENTSCHRIFT

(11) **EP 0 810 386 B1**
(45) Veröffentlichungstag und Bekanntmachung des Hinweises auf die Patenterteilung: **10.10.2001**
(21) Anmeldenummer: 96118799.4
(22) Anmeldetag: 23.11.1996
(51) Int. Cl.: F16F 13/10

(54) **Hydrolager**
Hydraulic support
Support hydraulique

(30) Priorität: 24.05.1996 DE 19620971
(43) Veröffentlichungstag der Anmeldung: 03.12.1997
(73) Patentinhaber: Firma Carl Freudenberg, 69469 Weinheim (DE)
(72) Erfinder: Simuttis, Arnold, Dr., 55545 Bad Kreuznach (DE)

(56) Entgegenhaltungen:
- EP-A- 0 262 296
- EP-A- 0 278 054
- DE-C- 3 225 700
- FR-A- 2 372 351
- FR-A- 2 714 947
- GB-A- 2 169 986
- US-A- 5 516 084
- PATENT ABSTRACTS OF JAPAN vol. 096, no. 004, 30.April 1996 & JP 07 317830 A (TOYO TIRE & RUBBER CO LTD), 8.Dezember 1995,
- PATENT ABSTRACTS OF JAPAN vol. 95, no. 6, 31.Juli 1995 & JP 07 063238 A (KURASHIKI KAKO), 7.März 1995,

## Beschreibung

### Technisches Gebiet

Die Erfindung betrifft ein Hydrolager umfassend einen mit einer Dämpfungsflüssigkeit gefüllten Arbeitsraum und einen Ausgleichsraum, die durch eine Trennwand voneinander getrennt und zur Dämpfung tieffrequenter Schwingungen durch einen Dämpfungskanal flüssigkeitsleitend verbunden sind.

### Stand der Technik

Ein solches Lager ist aus der DE 32 25 700 C1 bekannt. Die Trennwand umfaßt eine Membran aus elastomerem Werkstoff, die unabhängig voneinander bewegliche Teilbereiche aufweist und zwischen Gittern angeordnet ist.
Die Membran ist an ihrem Außenumfang dichtend in einem Düsenkäfig gehalten, wobei der Dämpfungskanal die Membran außenumfangsseitig mit radialem Abstand umschließt und dadurch einen maximalen Durchmesser aufweist.
Die Fläche der Membran zur Isolierung höherfrequenter Schwingungen ist daher vergleichsweise klein.

Der Erfindung liegt die Aufgabe zugrunde, ein Hydrolager der vorbekannten Art derart weiterzuentwickeln, daß der Dämpfungskanal zur Dämpfung tieffrequenter Schwingungen eine möglichst große Länge aufweist. Die Membran soll trotzdem eine möglichst große Fläche zur Isolierung höherfrequenter Schwingungen haben.

### Darstellung der Erfindung

Diese Aufgabe wird erfindungsgemäß mit den Merkmalen von Anspruch 1 gelöst. Auf vorteilhafte Ausgestaltungen nehmen die Unteransprüche bezug.

Zur Lösung der Aufgabe ist es vorgesehen, daß der Dämpfungskanal durch zwei Teilkanäle gebildet ist, die in einer funktionstechnischen Reihenschaltung angeordnet sind, daß die Teilkanäle in axialer Richtung des Hydrolagers beiderseits einer schwingfähigen Membran angeordnet sind, die einen Bestandteil der Trennwand bildet und daß die Membran mit einer Kanaltrennung versehen ist und zur flüssigkeitsleitenden Verbindung der Teilkanäle zumindest eine Ausnehmung innerhalb der Kanaltrennung aufweist. Die Membran besteht bevorzugt aus einem elastomeren Werkstoff. Durch die funktionstechnische Reihenschaltung der beiden Teilkanäle weist der Dämpfungskanal eine große Länge zur Dämpfung tieffrequenter Schwingungen auf. Durch den einfachen Aufbau der Trennwand ist diese in fertigungstechnischer und wirtschaftlicher Hinsicht einfach und kostengünstig herstellbar. Dadurch, daß die Teilkanäle durch eine Kanaltrennung, die einen Bestandteil der Membran bildet, räumlich voneinander getrennt und durch die Ausnehmung innerhalb der Kanaltrennung flüssigkeitsleitend miteinander verbunden sind, besteht die Möglichkeit, den Dämpfungskanal vom Außenumfang der Trennwand in Richtung des Zentrums zu verlagern und dadurch die außenumfangsseitigen Bereiche der Trennwand zu nutzen, um mittels einer größeren Membranoffenfläche die Isolierung höherfrequenter Schwingungen zu verbessern und eine Absenkung der dynamischen Federrate zu bewirken. Als Membranoffenfläche wird die hydraulisch wirksame Fläche der Membran bezeichnet.

Die Membran zur Isolierung höherfrequenter Schwingungen ist schwingfähig zwischen Hälften eines Düsenkäfigs angeordnet. Die Hälften des Düsenkäfigs können beispielsweise gitterförmig durchbrochen sein, wobei die Membran im Bereich ihrer Membranoffenflächen in Richtung der eingeleiteten Schwingungen hin- und herbewegbar ist. Die Hälften des Düsenkäfigs können beispielsweise aus einem metallischen Werkstoff bestehen.

Jeder der Teilkanäle kann mit einer Hälfte des Düsenkäfigs einstückig ineinander übergehend ausgebildet sein. Das Hydrolager weist dadurch insgesamt einen teilearmen Aufbau auf und ist einfach montierbar. Außerdem ist die Herstellung des Hydrolagers dadurch insgesamt vereinfacht.

Die Teilkanäle weisen jeweils einen nutförmigen Querschnitt auf, der axial in Richtung der Membran offen ist, wobei die stirnseitigen Enden der Teilkanäle und die Kanaldurchtrennung der Membran unter axialer Vorspannung dichtend aufeinander abgestützt sind. Für eine derartige Ausgestaltung ist von Vorteil, wenn die Membran aus einem elastomeren Werkstoff besteht, da es zur Abdichtung der Teilkanäle dann keiner sekundären Dichthilfsmittel bedarf.
Die Hälften des Düsenkäfigs sowie die einstückig damit verbundenen Teilkanäle können beispielsweise durch Spritzgießen einer Aluminiumlegierung hergestellt werden. Durch die einfache Geometrie der Bauteile ist dies problemlos möglich.

Die Kanaltrennung kann mit einer ringförmigen ersten Armierung versehen sein. Die elastische Nachgiebigkeit der Membran wird dadurch im Bereich der Kanaltrennung weiter reduziert und Relaxationserscheinungen wird vorgebeugt.

Die Teilkanäle können spiegelbildlich zur Membran ausgebildet sein. Die Herstellung des Düsenkäfigs ist dadurch weiter vereinfacht, daß die gleichen Bauteile für beide Hälften des Düsenkäfigs zu Anwendung gelangen können.

Das Verhältnis aus radialer Ausdehnung der Trennwand und radialer Ausdehnung der Teilkanäle beträgt zumindest 1,5. Als radiale Ausdehnung wird der größte Durchmesser der Trennwand innerhalb des Arbeitsraums und der mittlere Durchmesser des Dämpfungskanals betrachtet. Durch ein derartiges Verhältnis wird sichergestellt, daß die Membranoffenfläche größer ist, als der Ersatzkolbenquerschnitt des Federelements, das mit dem Traglager verbunden ist und mit der Trennwand den Arbeitsraum begrenzt. Das Federelement ist ringförmig und hohlkegelig ausgebildet.

Die Teilkanäle umschließen bevorzugt einen Zentralbereich der Membran, wobei der Zentralbereich eine geringere Dicke aufweist, als die Kanaltrennung. Hierbei ist von Vorteil, daß nur die Kanaltrennung der Membran eine vergleichsweise große Dicke aufweist, um die Teilkanäle, die die Kanaltrennung unter elastischer Vorspannung dichtend berühren, zuverlässig gegeneinander abzudichten. Der von den Teilkanälen umschlossene Zentralbereich der Membran sowie die Teilbereiche der Membran, die die Teilkanäle außenseitig umschließen, bilden die Membranoffenfläche und sind für die Isolierung höherfrequenter Schwingungen verantwortlich. Durch die - bezogen auf die Kanaltrennung - vergleichsweise verringerte Dicke, sind die Membranoffenflächen in Richtung der eingeleiteten Schwingungen besonders gut beweglich, so daß sich eine ausgezeichnete Isolierung höherfrequenter Schwingungen ergibt.

Der Zentralbereich kann mit zumindest einem Überdruckventil versehen sein. Das Überdruckventil kann beispielsweise aus einem im wesentlichen ohne Werkstoffentnahme erzeugten Schnitt bestehen. Stoßartige Belastungen mit großen Amplituden führen daher nicht zu gefährlichen Druckspitzen innerhalb des Lagers. Das Überdruckventil bewirkt einen raschen Druckausgleich zwischen der Arbeitskammer und der volumenveränderlichen Ausgleichskammer.

Die Membran kann radial außerhalb der Kanaltrennung eine Dicke aufweisen, die im wesentlichen der Dicke des Zentralbereichs entspricht und außenumfangsseitig mit allseitigem Abstand vom Düsenkäfig umschlossen sein. Die Isolierung höherfrequenter Schwingungen ist dadurch weiter verbessert, da die Membran bei kleinsten Wegen nahezu nicht verhärtet.

Die Membran kann in radialer Richtung zwischen den Teilkanälen und der außenumfangsseitigen Begrenzung des Düsenkäfigs mit zumindest einer, sich in Umfangsrichtung erstreckenden wulstförmigen ersten Verdickung versehen sein, wobei die erste Verdickung von stegförmigen zweiten Verdickungen in radialer Richtung überdeckt ist. Die ersten und die zweiten Verdickungen sind bevorzugt axial beiderseits der Membran angeordnet, wobei die zweiten Verdickungen gleichmäßig in Umfangsrichtung verteilt angeordnet und einander mit umfangsseitigem Abstand benachbart zugeordnet sind. Durch ein derartiges Profil der Membran bildet diese bei Einleitung tieffrequenter Schwingungen einen weichen progressiven Widerstand. Ein Klappern durch Anschlagen der Membran an den Düsenkäfig wird durch die starke Nichtlinearität der Membranblähfedereigenschaften vermieden.

Zur Erhöhung der Steifigkeit der Membran im Bereich der Verdickungen kann es vorgesehen sein, daß die Membran durch eine zweite Armierung versteift ist.

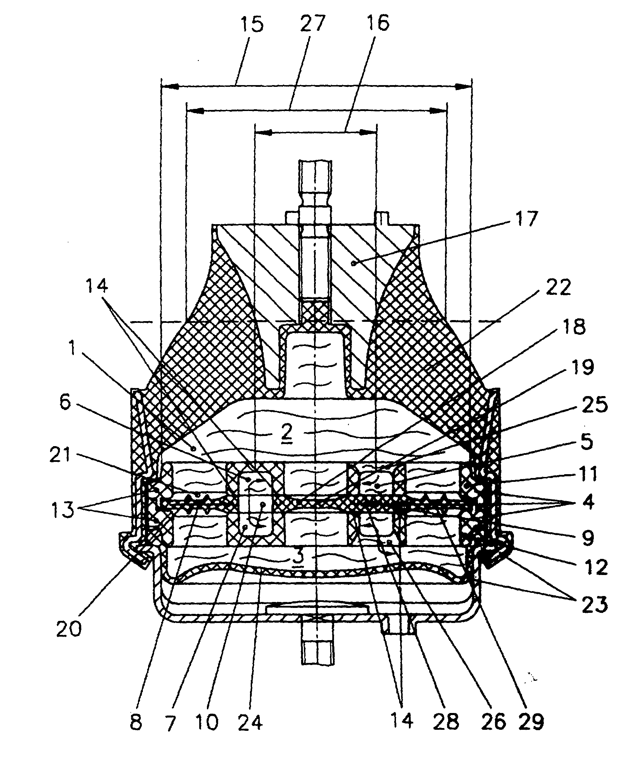

### Kurzbeschreibung der Zeichnung

Das erfindungsgemäße Hydrolager wird nachfolgend anhand der Zeichnung näher erläutert.

### Ausführung der Erfindung

In der Zeichnung ist ein Ausführungsbeispiel eines Hydrolagers in quergeschnittener Darstellung gezeigt. Das Lager umfaßt ein Auflager 17 und ein ringförmig und kegelig ausgebildetes Federelement 22 sowie ein Traglager 23, wobei das Federelement aus elastomerem Werkstoff besteht und mit dem Auflager 17 und dem Traglager 23 vulkanisiert ist. Das Hydrolager weist einen mit Dämpfungsflüssigkeit 1 gefüllten Arbeitsraum 2 und einen Ausgleichsraum 3 auf, wobei der Ausgleichsraum 3 geeignet ist, aus dem Arbeitsraum 2 verdrängte Dämpfungsflüssigkeit 1 im wesentlichen drucklos aufzunehmen. Der Arbeitsraum 2 ist durch das Auflager 17, das Federelement 22 und die Trennwand 4 begrenzt. Der Ausgleichsraum 3 ist durch die Trennwand 4 und einen Rollbalg 24 aus elastomerem Werkstoff begrenzt. Der Arbeitsraum 2 und der Ausgleichsraum 3 sind durch einen Dämpfungskanal 5 flüssigkeitsleitend miteinander verbunden, wobei der Dämpfungskanal 5 einen Bestandteil der Trennwand 4 bildet und aus den beiden Teilkanälen 6, 7 besteht. Der erste Teilkanal 6 ist mit der ersten Hälfte 11 des Düsenkäfigs 13, der zweite Kanal 7 mit der zweiten Hälfte 12 des Düsenkäfigs 13 einstückig ineinanderübergehend ausgebildet. Der Düsenkäfig 13 besteht in diesem Beispiel aus spritzgegossenem Aluminium. Zwischen den beiden Hälften 11, 12 des Düsenkäfigs 13 ist eine Membran 8 aus elastomerem Werkstoff angeordnet, die in radialer Richtung voneinander abweichende Dicken aufweist. Zur Abdichtung der beiden Teilkanäle 6, 7 gegeneinander weist die Membran 8 eine Kanaltrennung 9 auf, die, bezogen auf die in radialer Richtung beiderseits angrenzenden Teilbereiche dicker ausgebildet ist. Die Kanaltrennung 9 ist mit einer ringförmigen ersten Armierung 28 versehen, wobei sich in radialer Richtung außenseitig an die erste Armierung 28 die zweite Armierung 29 einstückig anschließt, die in radialer Richtung den gesamten Bereich der Verdickungen 20, 21 überdeckt. Hinsichtlich einer einfachen Herstellbarkeit ist eine derartige Ausbildung von hervorzuhebendem Vorteil. Davon abweichend können die beiden Armierungen 28, 29 auch zweistückig ausgebildet sein. Die Armierungen 28, 29 bestehen aus einem zähharten Werkstoff, beispielsweise aus Metall oder einem Polymer. Die Teilkanäle 6, 7 weisen die Form einer Ringnut auf und sind auf den einander zugewandten Seiten offen. Im Bereich ihrer Enden 14 sind die Teilkanäle 6, 7 unter axialer Vorspannung dichtend an die Kanaltrennung 9 angepsreßt. Zur flüssigkeitsleitenden Verbindung zwischen dem Arbeitsraum 2 und dem Ausgleichsraum 3 weist der erste Teilkanal 6 eine Eintrittsöffnung 25 auf, die Kanaltrennung 9 eine Ausnehmung 10 und der zweite Kanal 7 eine in den Ausgleichsraum 3 mündende Austrittsöffnung 26.

Die beiden Teilkanäle 6, 7 sind in einer funktionstechnischen Reihenschaltung angeordnet, wobei das Verhältnis aus radialer Ausdehnung 15 der Trennwand 4 und radialer Ausdehnung 16 der Teilkanäle 6, 7 in diesem Ausführungsbeispiel 2,5 beträgt. Die Durchmesser, die diesem Verhältnis zugrunde liegen, werden durch den Durchmesser der Trennwand 4 gebildet, der sich innerhalb des Arbeitsraums 2 befindet und den mittleren Durchmesser der Teilkanäle 6, 7.

Der Zentralbereich 18 der Membran 8 ist von einem Schnitt durchtrennt, der das Überdruckventil 19 bildet. Der Zentralbereich 18 sowie die Teilbereiche der Membran 8, die die Teilkanäle 6, 7 außenumfangsseitig umschließen, sind deutlich dünner ausgebildet als die Kanaltrennung 9. Als besonders vorteilhaft hat es sich bewährt, wenn das Verhältnis aus der Dicke der Kanaltrennung 9 und der Dicke der in radialer Richtung angrenzenden Bereiche maximal zwei beträgt. Die Isolierung höherfrequenter Schwingungen ist in diesen Fällen besonders effizient und eine sichere Abdichtung der beiden Teilkanäle zueinander gewährleistet. Die Membran 8 ist in axialer Richtung beiderseits mit zwei sich in Umfangsrichtung erstreckenden wulstförmigen ersten Verdickungen 20 versehen, die jeweils von stegförmigen zweiten Verdickungen 21 in radialer Richtung überdeckt sind. Die ersten Verdickungen 20 sind in Umfangsrichtung in sich geschlossen. Die zweiten Verdickungen 21 sind gleichmäßig in Umfangsrichtung verteilt und einander mit umfangsseitigem Abstand benachbart zugeordnet. Durch die erfindungsgemäße Ausgestaltung des Hydrolagers besteht die Möglichkeit, die dynamische Federrate unter die Grundfederrate zu senken in einem Frequenzbereich, der höher als 180 Hz liegt und dadurch ein überkritisches Verhalten zu erzielen. Dazu ist es erforderlich, daß die Membranoffenfläche größer ist, als der Ersatzkolbenquerschnitt 27 des Federelements 22.

Die Membran 8 bildet durch die Verdickungen 20, 21 bei Einleitung tieffrequenter Schwingungen einen weichen, progressiven Widerstand, während die Isolierung höherfrequenter Schwingungen ausgezeichnet ist, da die Membran 8 im Bereich ihrer außenumfangsseitigen Begrenzung einen axialen Freiweg innerhalb des Düsenkäfigs 13 hat und daher bei kleinsten Wegen nur vernachlässigbar gering verhärtet.

## Patentansprüche

1. Hydrolager, umfassend einen mit einer Dämpfungsflüssigkeit gefüllten Arbeitsraum und einen Ausgleichsraum, die durch eine Trennwand voneinander getrennt und zur Dämpfung tieffrequenter Schwingungen durch einen Dämpfungskanal flüssigkeitsleitend verbunden sind, **dadurch gekennzeichnet, daß** der Dämpfungskanal (5) durch zwei Teilkanäle (6, 7) gebildet ist, die in einer funktionstechnischen Reihenschaltung angeordnet sind, daß die Teilkanäle (6, 7) in axialer Richtung des Hydrolagers beiderseits einer schwingfähigen Membran (8) angeordnet sind, die einen Bestandteil der Trennwand (4) bildet und daß die Membran (8) mit einer Kanaltrennung (9) versehen ist und zur flüssigkeitsleitenden Verbindung der Teilkanäle (6, 7) zumindest eine Ausnehmung (10) innerhalb der Kanaltrennung (9) aufweist.

2. Hydrolager nach Anspruch 1, **dadurch gekennzeichnet, daß** die Membran (8) zur Isolierung höherfrequenter Schwingungen schwingfähig zwischen Hälften (11, 12) eines Düsenkäfigs (13) angeordnet ist.

3. Hydrolager nach einem der Ansprüche 1 oder 2, **dadurch gekennzeichnet, daß** jeder der Teilkanäle (6, 7) mit einer Hälfte (11, 12) des Düsenkäfigs (13) einstückig ineinander übergehend ausgebildet ist.

4. Hydrolager nach einem der Ansprüche 1 bis 3, die Teilkanäle (6, 7) jeweils einen nutförmigen Querschnitt aufweisen, der axial in Richtung der Membran (8) offen ist und daß die stirnseitigen Enden (14) der Teilkanäle (6, 7) und die Kanaltrennung (9) der Membran (8) unter axialer Vorspannung dichtend aufeinander abgestützt sind.

5. Hydrolager nach Anspruch 4, die Kanaltrennung (9) mit einer ringförmigen ersten Armierung (28) versehen ist.

6. Hydrolager nach einem der Ansprüche 1 bis 5, die Teilkanäle (6, 7) spiegelbildlich zur Membran (8) ausgebildet sind.

7. Hydrolager nach einem der Ansprüche 1 bis 6, **dadurch gekennzeichnet, daß** das Verhältnis aus radialer Ausdehnung (15) der Trennwand (4) und radialer Ausdehnung (16) der Teilkanäle (6, 7) zumindest 1,5 beträgt.

8. Hydrolager nach einem der Ansprüche 1 bis 7, **dadurch gekennzeichnet, daß** die Teilkanäle (6, 7) einen Zentralbereich (18) der Membran (8) umschließen.

9. Hydrolager nach Anspruch 8, **dadurch gekennzeichnet, daß** der Zentralbereich (18) eine geringere Dicke aufweist, als die Kanaltrennung (9).

10. Hydrolager nach einem der Ansprüche 8 oder 9, **dadurch gekennzeichnet, daß** der Zentralbereich (18) mit zumindest einem Überdruckventil (19) versehen ist.

11. Hydrolager nach einem der Ansprüche 1 bis 10, **dadurch gekennzeichnet, daß** die Membran (8) radial außerhalb der Kanaltrennung (9) eine Dicke aufweist, die im wesentlichen der Dicke des Zentralbereichs (18) entspricht.

12. Hydrolager nach einem der Ansprüche 1 bis 11, **dadurch gekennzeichnet, daß** die Membran (8) außenumfangsseitig mit allseitigem Abstand vom Düsenkäfig (13) umschlossen ist.

13. Hydrolager nach einem der Ansprüche 1 bis 12, **dadurch gekennzeichnet, daß** die Membran (8) in radialer Richtung zwischen den Teilkanälen (6, 7) und der außenumfangsseitigen Begrenzung des Düsenkäfigs (13) mit zumindest einer sich in Umfangsrichtung erstreckenden, wulstförmigen ersten Verdickung (20) versehen ist und daß die erste Verdickung (20) von stegförmigen zweiten Verdickungen (21) in radialer Richtung überdeckt ist.

14. Hydrolager nach Anspruch 13, **dadurch gekennzeichnet, daß** die Membran (8) im Bereich der Verdickungen (20, 21) durch eine zweite Armierung (29) versteift ist.

## Claims

1. A hydraulic mount, comprising a working space filled with a damping fluid and a compensating space which are separated from another by a partition and are connected in a fluid-conducting manner by means of a damping duct for the purpose of the damping of low-frequency vibrations, **characterized in that** the damping duct (5) is formed by two part-ducts (6, 7) which are arranged in a functional series connection, **in that** the part-ducts (6. 7) are arranged, in the axial direction of the hydraulic mount, on both sides of a vibratable diaphragm (8) which forms an integral part of the partition (4), and **in that** the diaphragm (8) is provided with a duct separation (9) and, for the fluid-conducting connection of the part-ducts (6, 7), has at least one recess (10) within the duct separation (9).

2. A hydraulic mount according to claim. 1, **characterized in that** the diaphragm (8) is arranged vibrationally between halves (11, 12) of a nozzle cage (13) for the purpose of the insulation of higher-frequency vibrations.

3. A hydraulic mount according to either one of claims 1 and 2, **characterized in that** each of the part-ducts (6, 7) is designed to merge integrally into a half (11, 12) of the nozzle cage (13).

4. A hydraulic mount according to any one of claims 1 to 3, **characterized in that** the part-ducts (6, 7) each have a groove-shaped cross section which is open axially in the direction of the diaphragm (8), and **in that** the end faces (14) of the part-ducts (6, 7) and the duct separation (9) of the diaphragm (8) are sealingly supported on one another under axial prestress.

5. A hydraulic mount according to claim 4, **characterized in that** the duct separation (9) is provided with an annular first reinforcement (28).

6. A hydraulic mount according to any one of claims 1 to 5, **characterized in that** the part-ducts (6, 7) are designed mirror-symmetrically to the diaphragm (8) .

7. A hydraulic mount according to any one of claims 1 to 6, **characterized in that** the ratio of the radial extent (15) of the partition (4) and the radial extent (16) of the part-ducts (6, 7) is at least 1.5.

8. A hydraulic mount according to any one of claims 1 to 7, **characterized in that** the part-ducts (6, 7) surround a central region (18) of the diaphragm (8).

9. A hydraulic mount according to claim 8, **characterized in that** the central region (18) has a smaller thickness than the duct separation (9).

10. A hydraulic mount according to either one of claims 8 and 9, **characterized in that** the central region (18) is provided with at least one pressure relief valve (19).

11. A hydraulic mount according to any one of claims 1 to 10, **characterized in that** the diaphragm (8) has, radially outside the duct separation (9), a thickness which corresponds essentially to the thickness of the central region (18).

12. A hydraulic mount according to any one of claims 1 to 11, **characterized in that** the diaphragm (8) is surrounded on the outer circumference by the nozzle cage (13) with a clearance on all sides.

13. A hydraulic mount according to any one of claims 1 to 12, **characterized in that** the diaphragm (8) is provided in the radial. direction, between the part-ducts (6, 7) and the outer-circumferential delimitation of the nozzle cage (13), with at least one bead-shaped first thickening (20) extending in the circumferential direction, and **in that** the first thickening (20) is covered in the radial direction by web-shaped second thickenings (21).

14. A hydraulic mount according to claim 13, **characterized in that** the diaphragm (8) is stiffened by means of a second reinforcement (29) in the region of the thickenings (20, 21).

## Revendications

1. Support hydraulique comprenant un espace de travail rempli avec un liquide d'amortissement et un espace de compensation qui sont séparés l'un de l'autre par une cloison et sont reliés par un canal d'amortissement d'une manière permettant la circulation de liquides afin d'amortir les vibrations basse fréquence, **caractérisé en ce que** le canal d'amortissement (5) est formé par deux canaux partiels (6, 7) situés dans un montage en série en ce qui concerne leur fonction, **en ce que** les canaux partiels (6, 7) sont situés, dans la direction axiale du support hydraulique, sur les deux côtés d'une membrane (8) susceptible de vibrer formant une partie de la cloison (4), et **en ce que** la membrane (8) est pourvue d'une séparation (9) pour les canaux et comporte au moins un évidement (10) à l'intérieur de la séparation (9) pour les canaux afin d'assurer une communication des canaux partiels (6, 7) permettant la circulation de liquides.

2. Support hydraulique selon la revendication 1, **caractérisé en ce que** la membrane (8) est située d'une manière susceptible de vibrer entre les moitiés (11, 12) d'une cage de buse (13) afin d'isoler les vibrations haute fréquence.

3. Support hydraulique selon l'une des revendications 1 ou 2, **caractérisé en ce que** chacun des canaux partiels (6, 7) est exécuté de manière à se confondre en ne formant qu'une seule pièce avec une moitié (11, 12) de la cage de buse (13).

4. Support hydraulique selon l'une des revendications 1 à 3, **caractérisé en ce que** les canaux partiels (6, 7) ont à chaque fois une section transversale en forme de gorge qui est ouverte axialement en direction de la membrane (8) et **en ce que** les extrémités frontales (14) des canaux partiels (6, 7) et la séparation (9) de la membrane (8) pour les canaux sont appuyées l'une sur l'autre de manière étanche sous l'effet d'une précontrainte axiale.

5. Support hydraulique selon la revendication 4, **caractérisé en ce que** la séparation (9) pour les canaux est pourvue d'une première armature (28) annulaire.

6. Support hydraulique selon l'une des revendications 1 à 5, **caractérisé en ce que** les canaux partiels (6, 7) sont exécutés de manière symétrique par rapport à la membrane (8).

7. Support hydraulique selon l'une des revendications 1 à 6, **caractérisé en ce que** le rapport entre l'étendue radiale (15) de la cloison (4) et l'étendue radiale (16) des canaux partiels (6, 7) est égal à au moins 1,5.

8. Support hydraulique selon l'une des revendications 1 à 7, **caractérisé en ce que** les canaux partiels (6, 7) entourent une zone centrale (18) de la membrane (8).

9. Support hydraulique selon la revendication 8, **caractérisé en ce que** la zone centrale (18) a une épaisseur inférieure à celle de la séparation (9) pour les canaux.

10. Support hydraulique selon l'une des revendications 8 ou 9, **caractérisé en ce que** la zone centrale (18) est pourvue d'au moins une soupape de surpression (19).

11. Support hydraulique selon l'une des revendications 1 à 10, **caractérisé en ce que** la membrane (8) a une épaisseur qui, à l'extérieur de la séparation (9) pour les canaux dans le sens radial, correspond essentiellement à l'épaisseur de la zone centrale (18).

12. Support hydraulique selon l'une des revendications 1 à 11, **caractérisé en ce que** la membrane (8) est entourée par la cage de buse (13) sur le côté de sa circonférence externe, avec une distance sur tous les côtés.

13. Support hydraulique selon l'une des revendications 1 à 12, **caractérisé en ce que** la membrane (8) est pourvue, dans le sens radial entre les canaux partiels (6, 7) et la limitation de la cage de buse (13) sur le côté de la circonférence externe, d'au moins un premier épaississement (20) en forme de bourrelet s'étendant dans la direction circonférentielle, et **en ce que** le premier épaississement (20) est couvert, dans la direction radiale, par des seconds épaississements (21) en forme de traverse.

14. Support hydraulique selon la revendication 13, **caractérisé en ce que** la membrane (8) est renforcée par une seconde armature (29) dans la zone des épaississements (20, 21).
